# EUROPÄISCHE PATENTSCHRIFT

(11) **EP 2 694 564 B1**
(45) Veröffentlichungstag und Bekanntmachung des Hinweises auf die Patenterteilung: **17.06.2015**
(21) Anmeldenummer: 12711412.2
(22) Anmeldetag: 02.04.2012
(51) Int. Cl.: C08G 18/48, C08G 18/50

(54) **VERFAHREN ZUR HERSTELLUNG VON PU-HARTSCHAUMSTOFFEN**
METHOD FOR PRODUCING RIGID PU FOAM MATERIALS
PROCÉDÉ DE PRODUCTION DE MOUSSES RIGIDES DE POLYURÉTHANE (PU)

(30) Priorität: 07.04.2011 EP 11161426
(43) Veröffentlichungstag der Anmeldung: 12.02.2014
(73) Patentinhaber: BASF SE, 67056 Ludwigshafen (DE)
(72) Erfinder: KUNST, Andreas, 67063 Ludwigshafen (DE); FRICKE, Marc, 49090 Osnabrück (DE); EMGE, Andreas, Shanghai 200127 (CN); SCHÜTTE, Markus, 49080 Osnabrück (DE)
(86) Internationale Anmeldenummer: PCT/EP2012/055922
(87) Internationale Veröffentlichungsnummer: WO 2012/136608

(56) Entgegenhaltungen:
- EP-A1- 0 161 424
- EP-A2- 0 352 776
- DE-A1- 19 905 573
- US-A1- 2009 234 036

## Beschreibung

Die vorliegende Erfindung betrifft ein Verfahren zur Herstellung von Polyurethan (PU)-Hartschaumstoffen durch Umsetzung von Polyisocyanaten mit Verbindungen mit mindestens zwei mit Isocyanatgruppen reaktiven Wasserstoffatomen in Gegenwart von Treibmitteln.

Polyurethan-Hartschaumstoffe sind seit langem bekannt und werden vorwiegend zur Wärme- und Kältedämmung, z. B. in Kühlgeräten, in Warmwasserspeichern, in Fernwärmerohren oder im Bauwesen, beispielsweise in Sandwichelementen, eingesetzt. Eine zusammenfassende Übersicht über die Herstellung und Anwendung von Hartschaumstoffen auf Isocyanatbasis findet sich beispielsweise im Kunststoff-Handbuch, Band 7, Polyurethane, 1. Auflage 1966, herausgegeben von Dr. R. Vieweg und Dr. A. Höchtlen, und 2. Auflage 1983, herausgegeben von Dr. Günter Oertel, und 3. Auflage 1993, herausgegeben von Dr. Günter Oertel, Carl Hanser Verlag, München, Wien.

Üblicherweise werden zur Herstellung von Hartschaumstoffen auf Isocyanatbasis Polyole mit hohen Funktionalitäten und relativ kurzen Ketten verwendet, um optimale Vernetzung der Schäume zu gewährleisten. Die vorzugsweise eingesetzten Polyetheralkohole haben zumeist eine Funktionalität von 4 bis 8 und eine Hydroxylzahl im Bereich zwischen 300 bis 600, insbesondere zwischen 400 und 500 mg KOH/g. Es ist bekannt, dass Polyole mit sehr hoher Funktionalität und Hydroxylzahlen im Bereich zwischen 300 und 600 eine sehr hohe Viskosität aufweisen, so dass sie nicht in Formulierungen verwendet werden können, die in den üblichen Produktionsanlagen noch verarbeitbar sind. Weiterhin ist bekannt, dass derartige Polyole sehr polar sind und somit eine schlechte Löslichkeit von Kohlenwasserstoffen aufweisen. Um diesen Mangel zu beheben, werden der Polyolkomponente häufig Polyetheralkohole zugesetzt mit Funktionalitäten zwischen 2 bis 4 und einer Hydroxylzahl von 250 bis 450 mg KOH/g. In WO2008/058863 wird ein Polyurethan-Hartschaumstoff beschrieben, der unter Verwendung eines TDA (Toluylendiamin)-basierten Polyetheralkohols hergestellt wurde. Derartige Polyole zeichnen sich durch eine relativ geringe Funktionalität aus und bewierken eine späte Auswärtung des Polyurethansystems. Damit können auch komplizierte Hohlräume, wie sie insbesondere bei Kühlmöbeln vorkommen, vollständig ausgefüllt werde. Es ist bekannt, dass die Fließfähigkeit der Polyolkomponenten auf Basis hochfunktioneller, polarer Polyole nicht immer zufriedenstellend ist.

Aus EP 1 138 709 ist außerdem bekannt, dass Hartschaumstoffe mit einer guten Fließfähigkeit hergestellt werden können, wenn Verbindungen mit mindestens zwei mit Isocyanatgruppen reaktiven Wasserstoffatomen mindestens einen Polyetheralkohol mit einer Hydroxylzahl von 100 bis 250 mg KOH/g enthalten, der durch Anlagerung von Alkylenoxiden an H-funktionelle Startsubstanzen mit 2 bis 4 aktiven Wasserstoffatomen, insbesondere Glykole, Trimethylolpropan, Glyzerin, Pentaerythrit oder TDA (Toluylendiamin) hergestellt wurde.

Das Dokument US2009/0234036 A1 offenbart ein Verfahren zur Herstellung von PUR-Hartschaumstoffen. In den Beispielen 1-8 wird die Herstellung dieser Schäume beschrieben: Es werden ein Polyetherpolyol A (OH-Zahl 350 mg KOH/g), ein mit Amin gestartetes Polyetherpolyol B (OH-Zahl 350 mg KOH/g) sowie ein mit Saccharose gestartetes Polyetherpolyol (OH-Zahl 380 mg KOH/g) mit Wasser, Zusatzstoffen und einem Polyisocyanat umgesetzt.

Die nach den beschriebenen Verfahren hergestellten Schaumstoffe können noch nicht allen Anforderungen der Technik gerecht werden.

Es stellte sich somit die Aufgabe, ein Verfahren zur Herstellung von Polyurethan-Hartschaumstoffen bereitzustellen, die sich durch optimales Fließverhalten auszeichnen bei niedriger Viskosität der Polyolkomponente. Außerdem sollte eine hohe Löslichkeit der in der Regel unpolaren Treibmittel im System und eine Verträglichkeit der eingesetzten Polyole untereinander gewährleistet sein. Weiterhin sollte gleichzeitig eine hohe Druckfestigkeit zur Einstellung niedriger Rohdichten im Bauteil erreicht werden.

Diese Aufgabe konnte überraschenderweise dadurch gelöst werden, dass Melamin-Polyetherole als eine Komponente der Hartschaum-Formulierung eingesetzt werden.

Die Melamin-Polyetherole sind beispielsweise erhältlich durch Ringöffnungspolymerisation von Alkylenoxiden mit Melamin-/Costarter-Mischungen, wie beispielsweise in DE 3 412 082 A1 beschrieben.

Der Gegenstand der vorliegenden Anmeldung ist also ein Verfahren zur Herstellung von Polyurethan-Hartschaumstoffen, wobei (a) mindestens ein Polyisocyanat unter Verwendung (b) mindestens eines Treibmittels mit (c) mindestens drei verschiedenen Verbindungen mit jeweils mindestens zwei mit Isocyanatgruppen reaktiven Wasserstoffatomen umgesetzt wird, wobei (i) eine der mindestens drei verschiedenen Verbindungen mit jeweils mindestens zwei mit Isocyanatgruppen reaktiven Wasserstoffatomen eine Polyether-Alkoholkomponente ist, die herstellbar ist durch Umsetzung einer Mischung von Melamin und mindestens einer weiteren hydroxy- und/ oder aminofunktionellen Verbindung mit einer Funktionalität im Bereich von 2 bis 8 mit mindestens einem Alkylenoxid, und (ii) eine weitere der mindestens drei verschiedenen Verbindungen mit jeweils mindestens zwei mit Isocyanatgruppen reaktiven Wasserstoffatomen eine Polyether-Alkoholkomponente ist, die sich durch eine Hydroxylzahl von 300 bis 600 mg KOH/ g bei einer mittleren Funktionalität von 4 bis 8 auszeichnet, und (iii) die dritte der mindestens drei verschiedenen Verbindungen mit jeweils mindestens zwei mit Isocyanatgruppen reaktiven Wasserstoffatomen eine Polyetheralkohol- und/ oder Polyesteralkoholkomponente ist, die sich durch eine Hydroxylzahl von 100 bis 350 mg KOH/ g bei einer mittleren Funktionalität von 2 bis 5, bevorzugt 2 bis 4, auszeichnet.

Hierbei wird die Hydroxylzahl nach DIN 53240 gemessen; die mittlere Funktionalität bezieht sich auf die freien OH-Gruppen.

Weitere Gegenstände der vorliegenden Anmeldung sind auch Polyurethan-Hartschaumstoffe, herstellbar nach dem erfindungsgemäßen Verfahren, sowie die Verwendung eines nach dem erfindungsgemäßen Verfahren herstellbaren Polyurethan-Hartschaumstoffs als Wärmedämmmaterial in Kühlgeräten, in Warmwasserspeichern, in Fernwärmerohren oder im Bauwesen.

In einer Ausführungsform des erfindungsgemäßen Verfahrens wird die Polyether-Alkoholkomponente (i) in Abwesenheit eines Katalysators hergestellt.

In einer weiteren Ausführungsform des erfindungsgemäßen Verfahrens ist die Polyether-Alkoholkomponente (i) herstellbar durch Umsetzung einer Mischung von Melamin und einer weiteren hydroxy- und/oder aminofunktionellen Verbindung im Massenverhältnis von 3:1 bis 1:3 und einer Funktionalität der Mischung im Bereich von 4 bis 6 mit mindestens einem Alkylenoxid.

Bei der Herstellung der Komponente (i) wird als Costarter-Verbindung, die in der Reaktionsmischung zusammen mit dem Melamin im Prozess mit dem Alkylenoxid zur Reaktion gebracht wird, mindestens eine weitere hydroxy- und/ oder aminonfunktionelle Verbindung mit einer Funktionalität von 2-8, bevorzugt von 2-6 verwendet.

Die hydroxyfunktionelle Verbindung unter (i) kann ausgewählt sein aus der Gruppe Ethylenglykol, Diethylenglykol, Propylenglykol, Dipropylenglykol, 1,3-Propandiol, 1,4-Butandiol, Neopentylglykol, 1,5-Pentandiol, 3-Methyl-1,5-pentandiol, 1,6-Hexandiol, 1,9-Nonandiol, 2-Methyl-1,8-octandiol, Cyclohexandiol oder Dichlorhexandimethanol, Glycerin, Trimethylolpropan, Trimethylolethan, Pentaerythritol, Sucrose, Saccharose, Glucose, Fructose, Mannose, Sorbitol, Dipentaerythrit, Tripentaerythrit, Polyester wie zum Beispiel Polyester auf Basis Caprolacton oder 1,4-Butandiol und Adipinsäure, Starter auf Basis nachwachsender Rohstoffe z. B. hydroxygruppenhaltige Fette wie z.B. Rizinusöl bzw. andere mit hydroxylgruppen modifizierte natürliche Öle wie Sonnenblumenöl, Sojaöl, Rapsöl, Palmöl, etc. und/oder hydroxygruppenhaltige Fettsäureester wie Hydroxyalkylstearat, Hydroxyalkyloleat, Hydroxyalkyllinolat, Hydroxyalkyllinoleoat im Speziellen Methylester bzw. Ethylester von Hydroxyfettsäuren, Lignin bzw. deren Salze hiervon wie z.B. Ligninsulfonat, Polysaccharide wie Stärke, Cellulose, Guar.

Die aminofunktionelle Verbindung unter (i) kann ausgewählt sein aus der Gruppe Ammoniak, Butylamin, Anilin, Methoxyanilin, Cyclohexylamine, 2-Ethylhexylamin, Dimethylamin, Diethylamin, Ethylendiamin, N-Methylanilin, N-Ethylanilin, 1,3-Diaminopropan, 3-(N,N-Dimethylamino)propylamin, 2,3-Toluoldiamin, 2,4-Toluoldiamin, 2,6-Toluoldiamin, Phenylendiamin, oder Mischungen hieraus. Ethanolamin, Isopropanolamin, Aminophenol, Diethanolamin, N-Methylmonoethanolamin, N-Methyldiethanolamin, N-Methylaminophenol, Triethanolamin, Tris(hydroxymethyl)aminomethan, Triisopropanolamin, N,N-Dimethylethanolamin, Monoethanolamin, Diethanolamin, Diethylendiamin.

Die hydroxy- oder aminofunktionellen Verbindungen unter (i) können jeweils als Reinsubstanzen oder als Mischungen eingesetzt werden.

Es können unter (i) auch wahlweise Alkylenoxid-Anlagerungsprodukte der oben genannten Starter-Substanzen oder Anlagerungsprodukte von Melamin als Costarter mit im Prozess eingesetzt werden. Ferner ist es denkbar, dass das Reaktionsprodukt des oben beschriebenen Prozesses selbst als Costarter zusammen mit dem Melamin in der Reaktionsmischung mit eingesetzt wird.

In einer weiteren Ausführungsform des erfindungsgemäßen Verfahrens ist die Polyether-Alkoholkomponente (i) herstellbar durch Umsetzung einer Mischung von Melamin und einer weiteren hydroxy- und/oder aminofunktionellen Verbindung ausgewählt aus der Gruppe enthaltend Glycerin, Propylenglykol, Ethylenglykol, Dipropylenglykol, Diethylenglykol, Trimethylolpropan, Sorbitol, Harnstoff, Biuret, Triethanolamin, Diethanolamin, Ethanolamin, Triisopropylamin, Diisoproplyamin, Isopropanolamin, Ethylendiamin (EDA), Toluyldiamin (TDA), Methylendianilin (M DA) mit mindestens einem Alkylenoxid.

In einer weiteren Ausführungsform des erfindungsgemäßen Verfahrens ist das mindestens eine Alkylenoxid unter (i) ausgewählt ist aus der Gruppe umfassend Propylenoxid, Ethylenoxid, 1,2-Butylenoxid und Styroloxid; bevorzugt werden Propylenoxid oder Propylenoxid/Ethylenoxid-Gemische verwendet.

In einer bevorzugten Ausführungsform des erfindungsgemäßen Verfahrens ist die Polyether-Alkoholkomponente (i) herstellbar durch Umsetzung einer Mischung von Melamin und einer weiteren hydroxy- und/oder aminofunktionellen Verbindung ausgewählt aus der Gruppe Glycerin, Propylenglykol, Ethylenglykol, Dipropylenglykol, Diethylenglykol, Trimethylolpropan, Sorbitol, Triethanolamin, Ethanoldiamin, Toluyldiamin mit mindestens einem Alkylenoxid, wobei das Alkylenoxid ausgewählt ist aus der Gruppe enthaltend Propylenoxid und Propylenoxid/Ethylenoxid-Gemische.

In einer weiteren Ausführungsform des erfindungsgemäßen Verfahrens wird die Polyether-Alkoholkomponente (i) in einem Temperaturbereich zwischen 120 und 180°C hergestellt.

Anstelle von Melamin (unsubstituiertes 2,4,6-Triamino-1,3,5-triazin) kommen unter (i) auch andere Aminotriazine in Frage, wie z. B. Hydroxy-, Alkyl- oder Aryl-substituierte Aminotriazine, wie beispielsweise Benzoguanamin, Valeroguanamin, Hexanoguanamin, Lauroguanamin, Stearoguanamin, Acetoguanamin, Caprinoguanamin oder Ammelin oder Mischungen hieraus. Bevorzugt kommt jedoch das unsubstituierte 2,4,6-Triamino-1,3,5-triazin (auch Melamin genannt) zum Einsatz. Das Aminotriazin kann als Reinsubstanz oder als Gemisch mit anderen Aminotriazinen eingesetzt werden.

Bei der Komponente (i) beträgt das Verhältnis von Melamin zum Costarter (d. h. zu der mindestens einen weiteren hydroxy- und/ oder aminofunktionellen Verbindung) in der Initiatormischung in der Regel 95:5 bis 5:95 Massenprozent, bevorzugt von 30:70 bis 70:30 Massenprozent, besonders bevorzugt von 40:60 bis 60:40 Massenprozent.

Die Anlagerung des Alkylenoxids bei der Herstellung der Komponente (i) kann in Anwesenheit von basischen Alkylenoxid-Anlagerungskatalysatoren wie Alkalimetallhydroxide oder Alkalimetallalkoholate sowie Amine erfolgen. In einer spezielleren und bevorzugten Ausführungsform verläuft die Anlagerung vollkommen ohne die Anwesenheit von Alkylenoxid-Anlagerungskatalysatoren.

Die Alkylenoxid-Anlagerung bei der Herstellung der Komponente (i) erfolgt bei Temperaturen von 100°C bis 200°C, bevorzugt von 120° bis 180°C, besonders bevorzugt von 140°C bis 170°C. Die Reaktion erfolgt im Druckbereich zwischen 0 und 20 bar, bevorzugt zwischen 0 und 10 bar.

Das Alkylenoxid kann für die Reaktion zur Herstellung der Komponente (i) zusammen mit der Initiatormischung aus Melamin und der mindestens einen weiteren hydroxy- und/ oder aminofunktionellen Verbindung komplett oder teilweise vorgelegt werden und während der Reaktion komplett oder teilweise zudosiert werden. Das bedeutet, dass das Verfahren im Batch-Verfahren oder im Semibatch-Verfahren durchgeführt werden kann, bevorzugt ist das Semibatch-Verfahren. Ferner ist es möglich, die Initiatormischung vor oder während der Synthese zuzudosieren. Eine weitere Möglichkeit besteht darin, den kompletten Herstellprozess kontinuierlich durchzuführen, wobei die Initiatormischung und das Alkylenoxid und/oder die Alkylenoxid-Mischung zudosiert werden und ein Teil des Reaktionsproduktes kontinuierlich dem Reaktionsansatz entnommen wird.

Nach beendeter Reaktion wird das Reaktionsprodukt, d. h. die Komponente (i), von restlichem Monomeren sowie von weiteren flüchtigen Bestandteilen durch Anlegen eines Vakuums befreit. Optional kann hierbei ein Gas-Strom während der Evakuierung durch das Endprodukt geleitet werden. Das für die Vakuum-Strippung verwendete Gas kann entweder Stickstoff und/oder Wasserdampf sein. Es ist auch denkbar eine sequentielle Vakuum-Strippung vorzunehmen wobei beispielsweise zunächst mit Wasserdampf gestrippt und anschließend mit Stickstoff gestrippt wird.

Nachdem das Reaktionsprodukt, d. h. die Komponente (i), vom Restmonomer befreit wurde, kann es optional durch Zugabe von sauren Substanzen wie Phosphorsäure, Schwefelsäure, Salzsäure, Salpetersäure und/oder CO₂ und sich anschließender Filtration neutralisiert werden. Dies ist insbesondere notwendig, wenn die Anlagerung der Alkylenoxide in Gegenwart von Alkalimetallhydroxid- oder Alkalimetallalkoholat-Katalysatoren erfolgt. Im Falle der autokatalytischen Umsetzung der Initiatorverbindungen mit Alkylenoxiden wird dieser Verfahrensschritt nicht benötigt. Wie oben bereits erwähnt, ist die autokatalytische Reaktion mit Alkylenoxiden bevorzugt.

Die Hydroxyzahl der Komponente (i), d.h. des Reaktionsproduktes aus der Reaktion eines Melamin-Costarter-Gemisches mit Alkylenoxid, liegt zwischen 1000 und 20 mg KOH/g, bevorzugt zwischen 100 und 800 mg KOH/g, besonders bevorzugt zwischen 300 und 600 mg KOH/g.

In einer Ausführungsform des erfindungsgemäßen Verfahrens ist die Polyether-Alkoholkomponente (ii) herstellbar durch Umsetzung mindestens einer Verbindung ausgewählt aus der Gruppe enthaltend Saccharose, Glycerin, Ethylenglykol, Diethylenglykol, Propylenglykol, Dipropylenglykol, 1-4 Butandiol, Pentaerythrit, Trimethylolpropan, Wasser, Sorbitol, Harnstoff, Biuret, EDA, TDA, MDA und Kombinationen aus den genannten Verbindungen mit mindestens einem Alkylenoxid.

In einer weiteren Ausführungsform des erfindungsgemäßen Verfahrens wird das für die Herstellung der Polyether-Alkoholkomponente (ii) verwendete Alkylenoxid ausgewählt aus der Gruppe enthaltend Propylenoxid und Mischungen aus Propylenoxid mit Ethylenoxid.

In einer Ausführungsform des erfindungsgemäßen Verfahrens ist die Komponente (iii) eine Polyetheralkoholkomponente, die herstellbar ist durch Umsetzung aliphatischer und/ oder aromatischer Amine mit Ethylenoxid und/ oder Propylenoxid.

Dabei wird in einer Ausführungsform unter (iii) ein aromatisches Amin verwendet. Hierbei wird bevorzugt vicinales Toluylendiamin verwendet.

In einer weiteren Ausführungsform wird unter (iii) ein aliphatisches Amin verwendet. Hierbei wird bevorzugt Ethylendiamin verwendet.

In einer weiteren Ausführungsform des erfindungsgemäßen Verfahrens ist die Komponente (iii) eine Polyetheralkoholkomponente, die herstellbar ist durch Umsetzung von Glycerin und/ oder Trimethylolpropan (TMP) mit Ethylenoxid und/ oder Propylenoxid.

In einer Ausführungsform des erfindungsgemäßen Verfahrens ist die Komponente (iii) eine Polyetheralkoholkomponente, ausgewählt aus der Gruppe umfassend Alkylenoxid-Anlagerungsprodukte von Zucker, Glycerin, Ethylenglykol, Diethylenglykol, Propylenglykol, Dipropylenglykol, 1-4 Butandiol, Pentaerythrit, Trimethylolpropan, Wasser oder Sorbitol oder Kombinationen aus den genannten Verbindungen, bevorzugt Glycerin, Ethylenglykol, Diethylenglykol, Propylenglykol und Dipropylenglykol.

In einer weiteren Ausführungsform des erfindungsgemäßen Verfahrens ist die Komponente (iii) eine Polyesteralkoholkomponente (iii), ausgewählt aus der Gruppe umfassend Kondensationsprodukte von Adipinsäure, Terepthalsäure, Isophthalsäure, Bernsteinsäure, mit difunktionellen Alkoholen, ausgewählt aus der Gruppe enthaltend Ethylenglykol und 1-4-Butandiol.

Der Anteil der Komponente (i), bezogen auf (i)+(ii)+(iii), beträgt bevorzugt zwischen 10 und 40 Gew.%.

Der Anteil der Komponente (ii), bezogen auf (i)+(ii)+(iii), beträgt bevorzugt zwischen 30 und 60 Gew.%.

In einer bevorzugten Ausführungsform des erfindungsgemäßen Verfahrens weist die Polyether-Alkoholkomponente (i) eine Hydroxyzahl im Bereich zwischen 300 - 600 mg KOH/g auf und ist herstellbar ist durch Umsetzung einer Mischung von Melamin und einer weiteren hydroxy-, und/oder aminofunktionellen Verbindung, im Massenverhältnis von 3:2 bis 2:3 und einer Funktionalität der Mischung im Bereich von 4 bis 6, mit Propylenoxid und/oder Propylenoxid/Ethylenoxid-Gemischen, und die Polyetheralkoholkomponente (ii) ist herstellbar durch Anlagerung von Propylenoxid und/oder Propylenoxid/Ethylenoxid-Gemischen an Toluylendiamin, und die weitere Verbindung (iii) ist eine Polyetheralkoholkomponente mit einer Funktionalität von 2 bis 3 und einer Hydroxyzahl im Bereich zwischen 100 und 300 mg KOH/g und ist herstellbar durch Anlagerung von Propylenoxid und/oder Propylenoxid/Ethylenoxid-Gemischen an Glycerin, Ethylenglykol, Diethylenglykol, Propylenglykol oder Dipropylenglykol oder Gemischen hieraus.

In einer Ausführungsform des erfindungsgemäßen Verfahrens ist das mindestens eine Polyisocyanat (a) ausgewählt aus der Gruppe enthaltend aromatische, aliphatische und cycloaliphatische Polyisocyanate.

Hierbei umfasst der Begriff "Polyisocyanat" im Sinne dieser Erfindung Verbindungen mit mindestens zwei Isocyanatgruppen, beispielsweise Diphenyl-Methan-Diisocyanat (MDI), Toluylendiisocyanat (TDI), Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4-und/oder -2,6-cyclohexan-diisocyanat, 4,4'-, 2,4'- und/oder 2,2'-Dicyclo-hexylmethan-diisocyanat; bevorzugt wird MDI und/ oder TDI verwendet.

In einer Ausführungsform des erfindungsgemäßen Verfahrens ist das mindestens eine Treibmittel (b) ausgewählt aus der Gruppe enthaltend physikalische Treibmittel und chemische Treibmittel.

Bevorzugt wird genau ein physikalisches und genau ein chemisches Treibmittel verwendet.

In Kombination mit oder an Stelle von chemischen Treibmitteln können auch physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50 °C. Zu den verwendbaren physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrigsiedende Alkane und Fluoralkane. Die physikalischen Treibmittel werden zumeist ausgewählt aus der Gruppe enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

In einer bevorzugten Ausführungsform der Erfindung sind die Treibmittel (c) Kohlenwasserstoffe. Besonders bevorzugt werden die Treibmittel ausgewählt aus der Gruppe enthaltend Alkane und/ oder Cycloalkane mit mindestens 4 Kohlenstoffatomen. Insbesondere werden Pentane, bevorzugt iso-Pentan und Cyclopentan, eingesetzt. Bei der Verwendung der Hartschaumstoffe als Isolierung in Kühlgeräten ist Cyclopentan bevorzugt. Die Kohlenwasserstoffe können im Gemisch mit Wasser eingesetzt werden.

Als Beispiele für erfindungsgemäß einsetzbare Treibmittel (c) seien genannt Propan, n-Butan, iso- und Cyclobutan , n-, iso- und Cyclopentan, Cyclohexan, Dimethylether, Methylethylether, Methylbutylether, Ameisensäuremethylester, Aceton, sowie Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, Difluorethan und 1,1,1,2,3,3,3-Heptafluorpropan, sowie Perfluoralkane, wie C₃F₈, C₄F₁₀, C₅F₁₂, C₆F₁₄, und C₇F₁₆. Die genannten physikalischen Treibmittel können allein oder in beliebigen Kombinationen untereinander eingesetzt werden.

Weiterhin können als Treibmittel Hydrofluorolefine, wie 1,3,3,3-Tetrafluorpropen, oder Hydrochlorfluorolefine, wie 1,Chlor-3,3,3-trifluorpropen, eingesetzt werden. Derartige Treibmittel sind beispielsweise in WO 2009/048826 beschrieben.

Als chemisches Treibmittel wird in einer bevorzugten Ausführungsform Wasser verwendet, das mit Isocyanatgruppen unter Abspaltung von Kohlendioxid reagiert. Als physikalisches Treibmittel kann zum Beispiel auch Ameisensäure eingesetzt werden

Die erfindungsgemäße Herstellung der Polyurethan-Hartschaumstoffe kann, falls erforderlich, in Anwesenheit von Katalysatoren, Flammschutzmitteln sowie üblichen Hilfs- und/ oder Zusatzstoffen durchgeführt werden.

Als Katalysatoren werden insbesondere Verbindungen eingesetzt, welche die Reaktion der Isocyanatgruppen mit den mit Isocyanatgruppen reaktiven Gruppen stark beschleunigen.

Solche Katalysatoren sind stark basische Amine, wie z. B. sekundäre aliphatische Amine, Imidazole, Amidine, sowie Alkanolamine oder organische Metallverbindungen, insbesondere organische Zinnverbindungen.

Wenn in den Polyurethan-Hartschaum auch Isocyanuratgruppen eingebaut werden sollen, werden dafür spezielle Katalysatoren benötigt. Als Isocyanurat-Katalysatoren werden üblicherweise Metallcarboxylate, insbesondere Kaliumacetat und dessen Lösungen, eingesetzt.

Die Katalysatoren können, je nach Erfordernis, allein oder in beliebigen Mischungen untereinander eingesetzt werden.

Als Hilfsmittel und/oder Zusatzstoffe kommen die für diesen Zweck an sich bekannten Stoffe, beispielsweise oberflächenaktive Substanzen, Schaumstabilisatoren, Zellregler, Füllstoffe, Pigmente, Farbstoffe, Flammschutzmittel, Hydrolyseschutzmittel, Antistatika, fungistatisch und bakteriostatisch wirkende Mittel zum Einsatz.

Weitere Angaben zu eingesetzten Ausgangsverbindungen finden sich beispielsweise im Kunststoffhandbuch, Band 7 "Polyurethane", herausgegeben von Günter Oertel, Carl-Hanser-Verlag München, 3. Auflage, 1993.

### Beispiele

In den folgenden Absätzen werden einige Beispiele angeführt, die zur Verdeutlichung einiger Aspekte der vorliegenden Erfindung dienen sollen. Keinesfalls sollen diese Beispiele als einschränkend für den Schutzumfang der Erfindung angesehen werden.

### Synthesebeispiel 1:

1,44 kg Melamin werden zusammen mit 1,44 kg Glycerin in einen 20 L Stahlautoklav vorgelegt und die Reaktionsmischung unter Rühren auf 160°C erwärmt. Nachdem die Reaktionstemperatur erreicht wurde, werden 11,51 kg Propylenoxid innerhalb von 6 Stunden zudosiert. Es schließt sich eine fünfstündige Nachreaktion an, bis der Druck einen konstanten Wert annimmt. Dann wird das Rohprodukt für 60 Minuten bei 15 mbar und 160°C vom Restmonomer und anderen flüchtigen Komponenten befreit. Es werden 14 kg einer leicht geblichen viskosen Flüssigkeit erhalten.

| | | |
|---|---|---|
| Hydroxywert: | 467 mg KOH/g | (DIN 53240) |
| Viskosität (bei 25°C): | 2161 mPas | (DIN 51550) |

### Synthesebeispiel 2:

1,2 kg Melamin werden zusammen mit 1,8 kg Trimethylolpropan in einen 20 L Stahlautoklav vorgelegt und die Reaktionsmischung unter Rühren auf 160°C erwärmt. Nachdem die Reaktionstemperatur erreicht wurde, werden 9,69 kg Propylenoxid innerhalb von 7 Stunden zudosiert. Es schließt sich eine sechsstündige Nachreaktion an, bis der Druck einen konstanten Wert annimmt. Dann wird das Rohprodukt für 60 Minuten bei 15 mbar und 160°C vom Restmonomer und anderen flüchtigen Komponenten befreit. Es werden 12 kg einer leicht geblichen viskosen Flüssigkeit erhalten.

| | | |
|---|---|---|
| Hydroxywert: | 490 mg KOH/g | (DIN 53240) |
| Viskosität (bei 25°C): | 4996 mPas | (DIN 51550) |

### Synthesebeispiel 3:

1,44 kg Melamin werden zusammen mit 1,44 kg Sorbitol in einen 20 L Stahlautoklav vorgelegt und die Reaktionsmischung unter Rühren auf 160°C erwärmt. Nachdem die Reaktionstemperatur erreicht wurde, werden 11,5 kg Propylenoxid innerhalb von 10 Stunden zudosiert. Es schließt sich eine siebenstündige Nachreaktion an, bis der Druck einen konstanten Wert annimmt. Dann wird das Rohprodukt für 60 Minuten bei 15 mbar und 160°C vom Restmonomer und anderen flüchtigen Komponenten befreit. Es werden 14 kg einer leicht gelblich gefärbten viskosen Flüssigkeit erhalten.

| | | |
|---|---|---|
| Hydroxywert: | 466 mg KOH/g | (DIN 53240) |
| Viskosität (bei 25°C): | 4013 mPas | (DIN 51550) |

### Anwendungsbeispiele:

Die Produkte hergestellt nach den Synthesebeispielen 1, 2 und 3 wurden in Polyurethanhartschaum-Formulierungen eingesetzt und mit einem Referenzsystem verglichen.

### Eingesetzte Rohstoffe:

Polyol A: Polyetheralkohol aus Saccharose, Glyzerin und Propylenoxid, Funktionalität 5,1, Hydroxylzahl 450, Viskosität 20000 mPa.s bei 25°C
Polyol B: Polyetheralkohol aus vicinalem TDA, Ethylenoxid und Propylenoxid, Gehalt an Ethylenoxid: 15%, Funktionalität 3,8, Hydroxylzahl 390, Viskosität 13000 mPa.s bei 25°C
Polyol C: Polyetheralkohol aus vicinalem TDA, Ethylenoxid und Propylenoxid, Gehalt an Ethylenoxid: 15%, Funktionalität 3,9, Hydroxylzahl 160, Viskosität 650 mPa.s bei 25°C

Stabilisator: Tegostab® B 8462 (Silikonstabilisator von Evonik)
Katalysator 1: Dimethylcyclohexylamin (BASF)
Katalysator 2: Pentamethyldiethylentriamin (BASF)
Katalysator 3: N,N',N"-Tris(dimethylaminopropyl)-s-hexahydrotriazin (BASF)
Isocyanat: Polymer-MDI (Lupranat® M20, BASF)

### Maschinenverschäumung:

Aus den angegebenen Rohstoffen wurde eine Polyolkomponente hergestellt. Mittels eines Hochdruck-Puromaten® PU 30/80 IQ (BASF Polyurethanes GmbH) mit einer Austragsmenge von 250 g/sek. wurde die Polyolkomponente mit der erforderlichen Menge des angegebenen Isocyanats vermischt, so dass ein Isocyanat-Index (wenn nicht anders angegeben) von 116,7 erreicht wurde. Die Reaktionsmischung wurde in temperierte Formwerkzeuge der Abmessungen 2000 mm x 200 mm x 50 mm bzw. 400 mm x 700 mm x 90 mm eingespritzt und dort aufschäumen lassen. Die Überfüllung betrug 15 %.

| | 1 (Referenz) (Gew.%) | 2 (Gew.%) | 3 (Gew.%) | 4 (Gew.%) |
|---|---|---|---|---|
| Polyol A | 47,88 | 47,88 | 47,88 | 47,88 |
| Polyol B | 30 | 0 | 0 | 0 |
| Polyol C | 16 | 16 | 16 | 16 |
| Polyol aus Beispiel 1 | 0 | 30 | 0 | 0 |
| Polyol aus Beispiel 2 | 0 | 0 | 30 | 0 |
| Polyol aus Beispiel 3 | 0 | 0 | 0 | 30 |
| Stabilisator | 1,9 | 1,9 | 1,9 | 1,9 |
| Wasser | 2,3 | 2,3 | 2,3 | 2,3 |
| Katalysator 1 | 1,222 | 1,328 | 1,328 | 1,328 |
| Katalysator 2 | 0,599 | 0,651 | 0,651 | 0,651 |
| Katalysator 3 | 0,479 | 0,521 | 0,521 | 0,521 |
| Cyclopentan 70% | 13 | 13 | 13 | 13 |
| Abbindezeit [s] | 35 | 33 | 35 | 35 |
| Freigeschäumte Rohdichte [g/L] | 23,0 | 23,2 | 22,7 | 23,1 |
| Viskosität der PolyolKomponente [mPas] | 8400 | 6000 | 5300 | 6100 |
| Minimale Fülldichte [g/L] | 30,8 | 31,1 | 30,4 | 31,1 |
| Fließfaktor (min. Fülldichte / freie Rohdichte) | 1,34 | 1,34 | 1,34 | 1,35 |
| Wärmeleitfähigkeit [mW/m*K] | 19,7 | 19,9 | 19,7 | 19,7 |
| Druckfestigkeit (RD 31) 15% OP, [N/mm²] | 15,6 | 16,8 | 17,4 | 17,0 |

Beispiel 1 stellt ein Vergleichsbeispiel dar. Die Systeme in Beispiel 2, 3 und 4 (alle erfindungsgemäß) mit Melaminalkoholen auf Basis von Melamin, Costarter und Propylenoxid weisen eine deutlich verbesserte mechanische Stabilität auf, die sich in einer erhöhten Druckfestigkeit äußert. Außerdem sind die Viskositäten der Polyolmischungen deutlich niedriger als im Vergleichsbeispiel.

## Patentansprüche

1. Verfahren zur Herstellung von Polyurethan-Hartschaumstoffen, wobei (a) mindestens ein Polyisocyanat unter Verwendung (b) mindestens eines Treibmittels mit (c) mindestens drei verschiedenen Verbindungen mit jeweils mindestens zwei mit Isocyanatgruppen reaktiven Wasserstoffatomen umgesetzt wird, wobei (i) eine der mindestens drei verschiedenen Verbindungen mit jeweils mindestens zwei mit Isocyanatgruppen reaktiven Wasserstoffatomen eine Polyether-Alkoholkomponente ist, die herstellbar ist durch Umsetzung einer Mischung von Melamin und mindestens einer weiteren hydroxy- und/ oder aminofunktionellen Verbindung mit einer Funktionalität im Bereich von 2 bis 8 mit mindestens einem Alkylenoxid, und (ii) eine weitere der mindestens drei verschiedenen Verbindungen mit jeweils mindestens zwei mit Isocyanatgruppen reaktiven Wasserstoffatomen eine Polyether-Alkoholkomponente ist, die sich durch eine Hydroxylzahl von 300 bis 600 mg KOH/ g bei einer mittleren Funktionalität von 4 bis 8 auszeichnet, und (iii) die dritte der mindestens drei verschiedenen Verbindungen mit jeweils mindestens zwei mit Isocyanatgruppen reaktiven Wasserstoffatomen eine Polyetheralkohol- und/ oder Polyesteralkoholkomponente ist, die sich durch eine Hydroxylzahl von 100 bis 350 mg KOH/ g bei einer mittleren Funktionalität von 2 bis 5 auszeichnet.

2. Verfahren zur Herstellung von Polyurethan-Hartschaumstoffen nach Anspruch 1, wobei die Polyether-Alkoholkomponente (i) in Abwesenheit eines Katalysators hergestellt wird.

3. Verfahren zur Herstellung von Polyurethan-Hartschaumstoffen nach Anspruch 1 oder 2, wobei die Polyether-Alkoholkomponente (i) herstellbar ist durch Umsetzung einer Mischung von Melamin und einer weiteren hydroxy- und/oder aminofunktionellen Verbindung im Massenverhältnis von 3:1 bis 1:3 und einer Funktionalität der Mischung im Bereich von 4 bis 6 mit mindestens einem Alkylenoxid.

4. Verfahren zur Herstellung von Polyurethan-Hartschaumstoffen nach einem der Ansprüche 1 bis 3, wobei die Polyether-Alkoholkomponente (i) herstellbar ist durch Umsetzung einer Mischung von Melamin und einer weiteren hydroxy- und/oder aminofunktionellen Verbindung, ausgewählt aus der Gruppe enthaltend Glycerin, Propylenglykol, Ethylenglykol, Dipropylenglykol, Diethylenglykol, Trimethylolpropan, Sorbitol, Harnstoff, Biuret, Triethanolamin, Diethanolamin, Ethanolamin, Triisopropanolamin, Diisopropanolamin, Isopropanolamin, Ethylendiamin (EDA), Toluyldiamin (TDA) und Methylendianilin (MDA), mit mindestens einem Alkylenoxid.

5. Verfahren zur Herstellung von Polyurethan-Hartschaumstoffen nach einem der Ansprüche 1 bis 4, wobei das mindestens eine Alkylenoxid unter (i) ausgewählt ist aus der Gruppe umfassend Propylenoxid, Ethylenoxid, 1,2-Butylenoxid und Styroloxid.

6. Verfahren zur Herstellung von Polyurethan-Hartschaumstoffen nach einem der Ansprüche 1 bis 5, wobei das Alkylenoxid unter (i) ausgewählt ist aus der Gruppe enthaltend Propylenoxid und Propylenoxid/Ethylenoxid-Gemische.

7. Verfahren zur Herstellung von Polyurethan-Hartschaumstoffen nach einem der Ansprüche 1 bis 6, wobei die Polyether-Alkoholkomponente (i) in einem Temperaturbereich zwischen 120 und 180°C hergestellt wird.

8. Verfahren gemäß einem der Ansprüche 1 bis 7, wobei die Polyether-Alkoholkomponente (ii) herstellbar ist durch Umsetzung mindestens einer Verbindung ausgewählt aus der Gruppe enthaltend Saccharose, Glycerin, Ethylenglykol, Diethylenglykol, Propylenglykol, Dipropylenglykol, 1-4 Butandiol, Pentaerythrit, Trimethylolpropan, Wasser, Sorbitol, Harnstoff, Biuret, EDA, TDA, M DA und Kombinationen aus den genannten Verbindungen mit mindestens einem Alkylenoxid.

9. Verfahren gemäß einem der Ansprüche 1 bis 8, wobei das für die Herstellung der Polyether-Alkoholkomponente (ii) verwendete Alkylenoxid ausgewählt ist aus der Gruppe enthaltend Propylenoxid und Mischungen aus Propylenoxid mit Ethylenoxid.

10. Verfahren zur Herstellung von Polyurethan-Hartschaumstoffen nach einem der Ansprüche 1 bis 9, wobei die Komponente (iii) eine Polyetheralkoholkomponente ist, die herstellbar ist durch Umsetzung aliphatischer und/ oder aromatischer Amine mit Ethylenoxid und/ oder Propylenoxid.

11. Verfahren zur Herstellung von Polyurethan-Hartschaumstoffen nach Anspruch 10, wobei unter (iii) ein aromatisches Amin verwendet wird.

12. Verfahren zur Herstellung von Polyurethan-Hartschaumstoffen nach Anspruch 11, wobei unter (iii) das aromatische Amin vicinales Toluylendiamin ist.

13. Verfahren zur Herstellung von Polyurethan-Hartschaumstoffen nach Anspruch 10, wobei unter (iii) ein aliphatisches Amin verwendet wird.

14. Verfahren zur Herstellung von Polyurethan-Hartschaumstoffen nach Anspruch 13, wobei unter (iii) das aliphatische Amin Ethylendiamin ist.

15. Verfahren zur Herstellung von Polyurethan-Hartschaumstoffen nach einem der Ansprüche 1 bis 9, wobei die Komponente (iii) eine Polyetheralkoholkomponente ist, die herstellbar ist durch Umsetzung von Glycerin und/ oder Trimethylolpropan mit Ethylenoxid und/ oder Propylenoxid.

16. Verfahren gemäß einem der Ansprüche 1 bis 15, wobei der Anteil der Komponente (i), bezogen auf (i)+(ii)+(iii), zwischen 10 und 40 Gew.% beträgt.

17. Verfahren gemäß einem der Ansprüche 1 bis 16, wobei der Anteil der Komponente (ii) bezogen auf (i)+(ii)+(iii) zwischen 30 und 60 Gew.% beträgt.

18. Verfahren zur Herstellung von Polyurethan-Hartschaumstoffen nach einem der Ansprüche 1 bis 17, wobei das mindestens eine Polyisocyanat (a) ausgewählt ist aus der Gruppe enthaltend aromatische, aliphatische und cycloaliphatische Polyisocyanate.

19. Verfahren zur Herstellung von Polyurethan-Hartschaumstoffen nach einem der Ansprüche 1 bis 18, wobei das mindestens eine Treibmittel (b) ausgewählt ist aus der Gruppe enthaltend physikalische Treibmittel und chemische Treibmittel.

20. Polyurethan-Hartschaumstoffe, herstellbar nach dem Verfahren eines der Ansprüche 1 bis 19.

21. Verwendung eines nach dem Verfahren eines der Ansprüche 1 bis 19 herstellbaren Polyurethan-Hartschaumstoffs als Wärmedämmmaterial in Kühlgeräten, in Warmwasserspeichern, in Fernwärmerohren oder im Bauwesen.

## Claims

1. A process for producing polyurethane rigid foams, which comprises (a) reacting at least one polyisocyanate by using (b) at least one blowing agent with (c) three or more different compounds each having two or more isocyanate-reactive hydrogen atoms, wherein (i) one of the three or more different compounds each having two or more isocyanate-reactive hydrogen atoms is a polyether alcohol component obtainable by reacting a mixture of melamine and at least one further hydroxyl- and/or amino-functional compound having a functionality ranging from 2 to 8 with at least one alkylene oxide, and (ii) a further one of the three or more different compounds each having two or more isocyanate-reactive hydrogen atoms is a polyether alcohol component having a hydroxyl number of 300 to 600 mg KOH/g coupled with an average functionality of 4 to 8, and (iii) the third one of the three or more different compounds each having two or more isocyanate-reactive hydrogen atoms is a polyether alcohol and/or polyester alcohol component having a hydroxyl number of 100 to 350 mg KOH/g coupled with an average functionality of 2 to 5.

2. The process for producing polyurethane rigid foams according to claim 1 wherein the polyether alcohol component (i) is obtained without a catalyst.

3. The process for producing polyurethane rigid foams according to claim 1 or 2 wherein the polyether alcohol component (i) is obtainable by reacting a mixture of melamine and a further hydroxyl- and/or amino-functional compound in a mass ratio ranging from 3:1 to 1:3 and a mixture functionality in the range from 4 to 6, with at least one alkylene oxide.

4. The process for producing polyurethane rigid foams according to any one of claims 1 to 3 wherein the polyether alcohol component (i) is obtainable by reacting a mixture of melamine and a further hydroxyl- and/or amino-functional compound selected from the group comprising glycerol, propylene glycol, ethylene glycol, dipropylene glycol, diethylene glycol, trimethylolpropane, sorbitol, urea, biuret, triethanolamine, diethanolamine, ethanolamine, triisopropanolamine, diisopropanolamine, isopropanolamine, ethylenediamine (EDA), tolylenediamine (TDA) and methylenedianiline (MDA), with at least one alkylene oxide.

5. The process for producing polyurethane rigid foams according to any one of claims 1 to 4 wherein the at least one alkylene oxide under (i) is selected from the group comprising propylene oxide, ethylene oxide, 1,2-butylene oxide and styrene oxide.

6. The process for producing polyurethane rigid foams according to any one of claims 1 to 5 wherein the alkylene oxide under (i) is selected from the group comprising propylene oxide and propylene oxide/ethylene oxide mixtures.

7. The process for producing polyurethane rigid foams according to any one of claims 1 to 6 wherein the polyether alcohol component (i) is obtained in a temperature range between 120 and 180°C.

8. The process according to any one of claims 1 to 7 wherein the polyether alcohol component (ii) is obtainable by reacting at least one compound selected from the group comprising sucrose, glycerol, ethylene glycol, diethylene glycol, propylene glycol, dipropylene glycol, 1,4-butanediol, pentaerythritol, trimethylolpropane, water, sorbitol, urea, biuret, EDA, TDA, MDA and combinations thereof, with at least one alkylene oxide.

9. The process according to any one of claims 1 to 8 wherein the alkylene oxide used for obtaining the polyether alcohol component (ii) is selected from the group comprising propylene oxide and mixtures of propylene oxide with ethylene oxide.

10. The process for producing polyurethane rigid foams according to any one of claims 1 to 9 wherein the component (iii) is a polyether alcohol component obtainable by reacting aliphatic and/or aromatic amines with ethylene oxide and/or propylene oxide.

11. The process for producing polyurethane rigid foams according to claim 10 wherein an aromatic amine is used under (iii).

12. The process for producing polyurethane rigid foams according to claim 11 wherein the aromatic amine under (iii) is vicinal tolylenediamine.

13. The process for producing polyurethane rigid foams according to claim 10 wherein an aliphatic amine is used under (iii).

14. The process for producing polyurethane rigid foams according to claim 13 wherein the aliphatic amine under (iii) is ethylenediamine.

15. The process for producing polyurethane rigid foams according to any one of claims 1 to 9 wherein the component (iii) is a polyether alcohol component obtainable by reaction of glycerol and/or trimethylolpropane with ethylene oxide and/or propylene oxide.

16. The process according to any one of claims 1 to 15 wherein the proportion of component (i), based on (i)+(ii)+(iii), is between 10% and 40% by weight.

17. The process according to any one of claims 1 to 16 wherein the proportion of component (ii), based on (i)+(ii)+(iii), is between 30% and 60% by weight.

18. The process for producing polyurethane rigid foams according to any one of claims 1 to 17 wherein the at least one polyisocyanate (a) is selected from the group comprising aromatic, aliphatic and cycloaliphatic polyisocyanates.

19. The process for producing polyurethane rigid foams according to any one of claims 1 to 18 wherein the at least one blowing agent (b) is selected from the group comprising physical blowing agents and chemical blowing agents.

20. A polyurethane rigid foam obtainable by the process of any one of claims 1 to 19.

21. The use of a polyurethane rigid foam obtainable by the process of any one of claims 1 to 19 as thermal insulating material in refrigerating appliances, hot water storage systems, district heating pipes or building construction.

## Revendications

1. Procédé pour la production de mousses dures de polyuréthane, dans lequel (a) au moins un polyisocyanate est transformé, en utilisant (b) au moins un agent gonflant, avec (c) au moins trois composés différents présentant à chaque fois au moins deux atomes d'hydrogène réactifs avec les groupes isocyanate, (i) un desdits au moins trois composés différents, présentant à chaque fois au moins deux atomes d'hydrogène réactifs avec les groupes isocyanate, étant un composant polyétheralcool, qui peut être préparé par transformation d'un mélange de mélamine et d'au moins un autre composé à fonctionnalité hydroxy et/ou amino présentant une fonctionnalité dans la plage de 2 à 8 avec au moins un oxyde d'alkylène et (ii) un autre desdits au moins trois composés différents, présentant chaque fois au moins deux atomes d'hydrogène réactifs avec les groupes isocyanate, étant un composant polyétheralcool qui se **caractérise par** un indice d'hydroxyle de 300 à 600 mg de KOH/g à une fonctionnalité moyenne de 4 à 8 et (iii) le troisième desdits au moins trois composés différents, présentant à chaque fois au moins deux atomes d'hydrogène réactifs avec les groupes isocyanate, étant un composant polyétheralcool et/ou polyesteralcool qui se **caractérise par** un indice d'hydroxyle 100 à 350 mg de KOH/g à une fonctionnalité moyenne de 2 à 5.

2. Procédé pour la production de mousses dures de polyuréthane selon la revendication 1, le composant polyétheralcool (i) étant préparé en l'absence d'un catalyseur.

3. Procédé pour la production de mousses dures de polyuréthane selon la revendication 1 ou 2, le composant polyétheralcool (i) pouvant être préparé par transformation d'un mélange de mélamine et d'un autre composé à fonctionnalité hydroxy et/ou amino, dans un rapport massique de 3:1 à 1:3 et à une fonctionnalité du mélange dans la plage de 4 à 6, avec au moins un oxyde d'alkylène.

4. Procédé pour la production de mousses dures de polyuréthane selon l'une quelconque des revendications 1 à 3, le composant polyétheralcool (i) pouvant être préparé par transformation d'un mélange de mélamine et d'un autre composé à fonctionnalité hydroxy et/ou amino, choisi dans le groupe contenant le glycérol, le propylèneglycol, l'éthylèneglycol, le dipropylèneglycol, le diéthylèneglycol, le triméthylolpropane, le sorbitol, l'urée, le biuret, la triéthanolamine, la diéthanolamine, l'éthanolamine, la triisopropanolamine, la diisopropanolamine, l'isopropanolamine, l'éthylènediamine (EDA), la toluylènediamine (TDA) et la méthylènedianiline (MDA), avec au moins un oxyde d'alkylène.

5. Procédé pour la production de mousses dures de polyuréthane selon l'une quelconque des revendications 1 à 4, ledit au moins un oxyde d'alkylène au point (i) étant choisi dans le groupe comprenant l'oxyde de propylène, l'oxyde d'éthylène, l'oxyde de 1,2-butylène et l'oxyde de styrène.

6. Procédé pour la production de mousses dures de polyuréthane selon l'une quelconque des revendications 1 à 5, l'oxyde d'alkylène au point (i) étant choisi dans le groupe contenant l'oxyde de propylène et les mélanges d'oxyde de propylène/oxyde d'éthylène.

7. Procédé pour la production de mousses dures de polyuréthane selon l'une quelconque des revendications 1 à 6, le composant polyétheralcool (i) étant préparé dans une plage de température entre 120 et 180°C.

8. Procédé selon l'une quelconque des revendications 1 à 7, le composant polyétheralcool (ii) pouvant être préparé par transformation d'au moins un composé choisi dans le groupe contenant le saccharose, le glycérol, l'éthylèneglycol, le diéthylèneglycol, le propylèneglycol, le dipropylèneglycol, le 1,4-butanediol, le pentaérythritol, le triméthylolpropane, l'eau, le sorbitol, l'urée, le biuret, l'EDA, la TDA, la MDA et les combinaisons des composés mentionnés avec au moins un oxyde d'alkylène.

9. Procédé selon l'une quelconque des revendications 1 à 8, l'oxyde d'alkylène utilisé pour la préparation du composant polyétheralcool (ii) étant choisi dans le groupe contenant l'oxyde de propylène et les mélanges d'oxyde de propylène et d'oxyde d'éthylène.

10. Procédé pour la production de mousses dures de polyuréthane selon l'une quelconque des revendications 1 à 9, le composant (iii) étant un composant polyétheralcool qui peut être préparé par transformation d'amines aliphatiques et/ou aromatiques avec de l'oxyde d'éthylène et/ou de l'oxyde de propylène.

11. Procédé pour la production de mousses dures de polyuréthane selon la revendication 10, une amine aromatique étant utilisée au point (iii).

12. Procédé pour la production de mousses dures de polyuréthane selon la revendication 11, l'amine aromatique au point (iii) étant la toluylènediamine vicinale.

13. Procédé pour la production de mousses dures de polyuréthane selon la revendication 10, une amine aliphatique étant utilisée au point (iii).

14. Procédé pour la production de mousses dures de polyuréthane selon la revendication 13, l'amine aliphatique au point (iii) étant l'éthylènediamine.

15. Procédé pour la production de mousses dures de polyuréthane selon l'une quelconque des revendications 1 à 9, le composant (iii) étant un composant polyétheralcool qui peut être préparé par transformation de glycérol et/ou de triméthylolpropane avec de l'oxyde d'éthylène et/ou de l'oxyde de propylène.

16. Procédé selon l'une quelconque des revendications 1 à 15, la proportion du composant (i), par rapport à (i)+(ii)+(iii), étant située entre 10 et 40% en poids.

17. Procédé selon l'une quelconque des revendications 1 à 16, la proportion du composant (ii), par rapport à (i)+(ii)+(iii), étant située entre 30 et 60% en poids.

18. Procédé pour la production de mousses dures de polyuréthane selon l'une quelconque des revendications 1 à 17, ledit au moins un polyisocyanate (a) étant choisi dans le groupe contenant les polyisocyanates aromatiques, aliphatiques et cycloaliphatiques.

19. Procédé pour la production de mousses dures de polyuréthane selon l'une quelconque des revendications 1 à 18, ledit au moins un agent gonflant (b) étant choisi dans le groupe contenant les agents gonflants physiques et les agents gonflants chimiques.

20. Mousses dures de polyuréthane pouvant être préparées selon le procédé selon l'une quelconque des revendications 1 à 19.

21. Utilisation d'une mousse dure de polyuréthane pouvant être préparée selon le procédé selon l'une quelconque des revendications 1 à 19 comme matériau d'isolation thermique dans les appareils réfrigérateurs, dans les accumulateurs d'eau chaude, dans les conduites de chauffage urbain ou dans la construction.
